# EUROPÄISCHE PATENTANMELDUNG

(11) **EP 4 708 163 A1**
(43) Veröffentlichungstag der Anmeldung: **11.03.2026**
(21) Anmeldenummer: 25201287.7
(22) Anmeldetag: 10.09.2025
(51) Int. Cl.: G06Q 10/0631, G06Q 50/43, G06F 3/16

(54) **SCHALLEREIGNIS-ERFASSUNGSSYSTEM**

(30) Priorität: 10.09.2024 DE 102024002907
(71) Anmelder: Schierenberg, Kaye, 32694 Dörentrup (DE); Schierenberg, Zuzanna, 32694 Dörentrup (DE)
(72) Erfinder: Schierenberg, Kaye, 32694 Dörentrup (DE); Schierenberg, Zuzanna, 32694 Dörentrup (DE)
(74) Vertreter: Grosse Schumacher Knauer von Hirschhausen

(57) **Zusammenfassung**

Die Erfindung betrifft ein Schallereignis-Erfassungssystem (1) umfassend eine Datenverarbeitungs-einrichtung (2) sowie eine Schallereignis-Aufzeichnungs-Einrichtung (11). Die Datenverarbeitungseinrichtung (2) ist dazu geeignet, eine auf einem mit der Datenverarbeitungseinrichtung (2) datentechnisch verbindbaren Datenanzeigegerät (4) anzeigbare Benutzeroberfläche (5) zu generieren. Über die Benutzeroberfläche (5) sind mittels einem mit der Datenverarbeitungseinrichtung (2) verbindbaren Dateneingabegerät mehrere Benutzerdaten (8) generierbar, welche in einer mit der Datenverarbeitungseinrichtung (2) über zumindest eine Datenbank-Schnittstelle verbundenen Datenbank (10) hinterlegbar sind. In der Datenverarbeitungseinrichtung (2) sind Funktionsdaten (9) dadurch generierbar, dass die Benutzerdaten (8) mit in der Datenverarbeitungseinrichtung (2) hinterlegten Systemdaten (7) verglichen und/oder datentechnisch zugeordnet werden. Die Schallereignis-Aufzeichnungs-Einrichtung (11) ist in einem mit der Datenbank (10) datentechnisch verbundenen Transport-Kraftfahrzeug (12), insbesondere Kleintransporter, zu Transportzwecken angeordnet. Die Schallereignis-Aufzeichnungs-Einrichtung (11) umfasst zumindest ein in einem fahrbaren und/oder portablen sowie in dem Transport-Kraftfahrzeug (12), insbesondere Kleintransporter, befestigbaren Gestell (14) angeordnetes digitales Audiointerface (15) mit zumindest mehreren Mikrofoneingängen für mehrere im Transport-Kraftfahrzeug (12), insbesondere Kleintransporter, verstaubare Mikrofone. Das Transport-Kraftfahrzeug (12), insbesondere Kleintransporter, umfasst eine Navigations- und Kommunikations-Einrichtung (16), welche mit der Datenverarbeitungseinrichtung (2) datentechnisch verbunden ist. Das Transport-Kraftfahrzeug (12), insbesondere Kleintransporter, umfasst eine, insbesondere portable, Recheneinrichtung (17), welche datentechnisch mit dem Audiointerface (15) und mit der Datenverarbeitungseinrichtung (2) verbunden ist. Beim Navigieren des Transportfahrzeugs (12), insbesondere Kleintransporter, und/oder beim Kommunizieren mit der Kommunikations-Einrichtung (16), und/oder bei einem Datenaustausch mit der Recheneinrichtung (17) sind zumindest einige der Funktionsdaten (9) datentechnisch abfragbar.

## Beschreibung

### GEBIET DER ERFINDUNG

Die Erfindung betrifft ein Schallereignis-Erfassungssystem gemäß dem Oberbegriff des Anspruchs 1. Demnach umfasst das Schallereignis-Erfassungssystem eine Datenverarbeitungseinrichtung sowie eine Schallereignis-Aufzeichnungs-Einrichtung. Ein Schallereignis kann Musik umfassen, etwa von einem Solo-Künstler, oder von einer Künstlergruppe, etwa einem Chor oder Orchester. Das Schallereignis kann auch Sprache betreffen, beispielsweise in Form eines (vor-)gelesenen Textes, oder einer Unterhaltung mit zwei oder mehreren Personen. Das Schallereignis kann auch die Geräusche von (Klein-)Kindern oder Tieren betreffen.

Die Datenverarbeitungseinrichtung ist dazu geeignet, eine auf einem mit der Datenverarbeitungseinrichtung datentechnisch respektive kommunikationstechnisch verbindbaren Datenanzeigegerät anzeigbare Benutzeroberfläche (EDV-Plattform) zu generieren. Die (Daten-/Kommunikations-)Verbindung kann mittels Internet-Netzwerk oder Cloud-Anbindung erfolgen. Das Datenanzeigegerät kann Bestandteil eines PCs, eines Tabletts, eines Smart Device, eines Smartphones, oder eines anderen (mobilen) Anwender-Endgerätes sein. Über die Benutzeroberfläche sind mittels einem mit der Datenverarbeitungseinrichtung verbindbaren Dateneingabegerät (Tastatur, Touch-Screen, Spracherkennung) mehrere Benutzerdaten generierbar, welche in einer mit der Datenverarbeitungseinrichtung über zumindest eine Datenbank-Schnittstelle verbundenen Datenbank hinterlegbar sind.

In der Datenverarbeitungseinrichtung sind Funktionsdaten dadurch generierbar, dass die Benutzerdaten mit in der Datenverarbeitungseinrichtung hinterlegten Systemdaten verglichen und/oder datentechnisch zugeordnet werden. Systemdaten können zugeordnet sein einer Benutzerdatenbank, einer Geo-Datenbank (Navigation), einer Tontechniker- respektive Engineer-Datenbank umfassend zumindest Informationen betreffend Kontaktdaten und Know-How-Daten von (Ton-)Technikern, Audio Engineers, einer Tontechnik-Datenbank umfassend zumindest Informationen betreffend Tontechnik-Equipment und/oder Tontechnik-Software (beispielsweise Treiber für Hardware-Komponenten des Aufnahmemoduls, insbesondere des Audiointerface, des Mikrofonvorverstärkers), einer Audio-Datenbank umfassend kundenbezogene digitale Audiodateien, einer Kosten-Tabelle, einem Kalender, einem E-Mail-Client, einem Nachrichten-Client, etc.. Die Schallereignis-Aufnahmeeinrichtung ist zu Transportzwecken in einem mit der Datenbank datentechnisch verbundenen Transport-Kraftfahrzeug, insbesondere Kleintransporter, angeordnet. Am Ort der Schallereignis-Erfassung wird die Aufnahmeeinrichtung aus dem Transportfahrzeug entnommen und dort aufgestellt, wo die Schallereignis-Erfassung stattfinden soll. Ein Kleintransporter ist beispielsweise ein VW T6, VW Multivan, ein VW ID. Buzz, eine Mercedes V-Klasse, ein Ford Tourneo, oder ein dazu vergleichbares Kraftfahrzeug. Die Schallereignis-Aufnahmeeinrichtung umfasst zumindest ein in einem fahrbaren und/oder portablen sowie in dem Transport-Kraftfahrzeug (Kleintransporter) befestigbaren Gestell angeordnetes digitales Audiointerface mit zumindest mehreren Mikrofoneingängen oder mit zumindest einer Schnittstelle für zumindest einen Mikrofonvorverstärker für mehrere im Transport-Kraftfahrzeug verstaubare Mikrofone.

Außerdem betrifft die Erfindung ein Verfahren zum Erfassen eines Schallereignisses gemäß dem Oberbegriff des Anspruchs 11. Bei dem Verfahren ist vorgesehen, dass auf einem Datenanzeigegerät eines Benutzers eine von einer Datenverarbeitungseinrichtung generierte Benutzeroberfläche angezeigt wird. Über die Benutzeroberfläche werden mittels einem mit der Datenverarbeitungseinrichtung verbindbaren Dateneingabegerät mehrere Benutzerdaten generiert, welche in einer mit der Datenverarbeitungseinrichtung über zumindest eine Datenbank-Schnittstelle verbundenen Datenbank hinterlegt werden. In der Datenverarbeitungseinrichtung werden Funktionsdaten dadurch generiert, dass die Benutzerdaten mit in der Datenverarbeitungseinrichtung hinterlegten Systemdaten verglichen und/oder datentechnisch zugeordnet werden.

### TECHNOLOGISCHER HINTERGRUND

Für das Erfassen eines Schallereignisses wie zum Beispiel einer Aufzeichnung eines Songs einer kleinen Gruppe von Interpreten/Künstlern war es bislang erforderlich, Kontakt zu einem Tonstudio herzustellen, und bei Beauftragung zu dem Ort anzureisen, an dem das Tonstudio ansässig ist. Dabei müssen die Künstler/Interpreten ihre Musikgeräte, sofern sie portabel sind, in der Regel mitnehmen.

Eine Marktbeobachtung in der Tonstudio-Branche hat ergeben, dass die meisten Künstler/Interpreten die Tonstudio-Angebote als intransparent wahrnehmen und als wenig nachvollziehbar und insofern schlecht vergleichbar. Außerdem scheuen viele Künstler/Interpreten den logistischen Aufwand, der mit einer An- und Abreise zu einem Tonstudio verbunden ist. Hinzu kommt, dass ein Mangel an KnowHow und Erfahrung und die oft auftretende Nervosität der Künstler/Interpreten dazu beitragen, dass das standortgebundene - und oftmals mit Prestige überfrachtete - Tonstudio nicht als Ort des Wohlfühlens ("Save Space") empfunden wird. Hier setzt die Erfindung ein.

### DARSTELLUNG DER ERFINDUNG

Die zu lösende Aufgabe besteht darin, das Erfassen von Schallereignissen zu vereinfachen und für Künstler/Interpreten oder andere beteiligte Personen attraktiver zu gestalten. Diese Aufgabe wird durch ein Schallereignis-Erfassungssystem gemäß Anspruch 1 gelöst. Demnach umfasst das Transport-Kraftfahrzeug (Kleintransporter) eine Navigations- und Kommunikations-Einrichtung, welche mit der Datenverarbeitungseinrichtung datentechnisch verbunden ist. Das Transport-Kraftfahrzeug umfasst zumindest eine, insbesondere portable, Recheneinrichtung, beispielsweise Notebook oder Laptop, welche datentechnisch mit dem Audiointerface und/oder mit der Datenverarbeitungseinrichtung verbindbar respektive verbunden ist. Eine Recheneinrichtung kann einem oder mehreren (Ton-)Technikern zugeordnet sein. Auf der Recheneinrichtung kann (Tontechnik-)Software installiert sein, die mit dem Audiointerface kompatibel ist. Eine weitere Recheneinrichtung kann der Navigations-/ Kommunikationseinrichtung zugeordnet sein.

Beim Navigieren des Transportfahrzeugs und oder beim Kommunizieren mit der Kommunikations-Einrichtung und/oder bei einem Datenaustausch mit der Recheneinrichtung sind zumindest einige der Funktionsdaten datentechnisch abfragbar. Bevorzugt ist die Kommunikations-Einrichtung dem Transportfahrzeug zugeordnet und darin fest verbaut und die (portable) Recheneinrichtung ist dem Techniker zugeordnet. Auf eine datentechnische Schnittstelle zwischen dem Transportfahrzeug oder der Kommunikations-Einrichtung des Transportfahrzeugs und dem Audiointerface kann verzichtet werden. Das Audiointerface umfasst die Funktionen eines Mischpults, an dem mehrere Mikrofone (direkt und/oder über einen Vorverstärker) für die Audioaufzeichnung anschließbar sind. Die Mikrofone und die Kabel dafür befinden sich im Transport-Kraftfahrzeug. Von der Datenverarbeitungseinrichtung werden Benutzerdaten (z. B. Adresse, Schallereignis-Genre) und/oder Funktionsdaten (z. B. Informationen betreffend das Tontechnik-Equipment) an die in den Systemdaten hinterlegten bzw. mit den Systemdaten abgeglichene Kontaktadresse des Fahrers/Technikers gesendet. Die Navigationsdaten werden direkt an das Transportfahrzeug respektive an den Fahrer/Techniker im Fahrzeug gesendet. Insofern bedarf es nicht zwingend einer Rücksprache zwischen Benutzer (Kunde) und Management, die Informationen werden über das System transparent verarbeitet. Der Techniker bekommt vom System einen Auftrag und begibt sich zum Transport-Kraftfahrzeug und fährt damit, unterstützt durch die System-Navigationsdaten und/oder die Kopplung zur Datenverarbeitungseirichtung, zum Ort der Aufnahme zum Aufnehmen des Schallereignisses. Dadurch entfällt, in nachhaltiger Weise, der Reise- und Transport-Aufwand für den oder die Künstler/Interpreten/Kunden. Nachhaltig ist auch, dass ein Benutzen veralteter, oftmals Stromverbrauchs-intesiver, Tontechnik in standortgebundenen Tonstudios entfällt. Nachhaltig ist außerdem, dass bei der Schallereignis-Erfassung (Aufnahme) die Kundenwünsche und die Kundenorientierung im Fokus liegen.

Die Ladefläche des (Klein-)Transporters kann so beschaffen sein, dass die Ladefläche speziell für das Tontechnik-Equipment ausgebaut ist, sodass der vorhandene Stauraum optimal genutzt wird. Schubfächer, Schubladen und dergleichen sind an die Abmessungen des technischen Equipments angepasst. Dies erleichtert beispielsweise eine Überprüfung auf Vollständigkeit, bevor der (Klein-)Transporter zum Ort der Schallereignis-Aufzeichnung gefahren wird.

Bevorzugt umfasst das Audiointerface zumindest einen Low-Latency-Treiber, zumindest ein Interface respektive eine Anbindung zu einer (beispielsweise auf der Recheneinrichtung des Technikers angeordneten) Tonstudio-Simulationssoftware, zumindest einen Thunderbolt-Anschluss mit einem Thunderbolt-2-Standard oder einen Thunderbolt-3-Standard oder einen Thunderbolt-4-Standard oder einem höheren Thunderbolt-Standard, und/oder mindestens 8 Mikrofon-Eingänge, insbesondere erweiterbar auf mindestes 32 Mikrofon-Eingänge, und/oder zumindest eine Alesis-Digital-Audio-Tape-Schnittstelle (ADAT-Schnittstelle). Als Latenz wird die Signalverzögerung bei der Signalhandhabung verstanden, sie sollte spürbar geringer sein als etwa 10 ms. Die Samplerate des Audiointerface kann beispielsweise so einstellbar sein, dass zum Aufzeichnen des Schallereignisses eine niedrige Latenz gegeben ist. Die geringe Latenz ist insbesondere bei akustischen Effekten (Hall, Kompression, Pitch-Korrektur) erforderlich. Über einen Vorverstärker des Interface gelangt das Rohsignal in die Audiosoftware, wird damit bearbeitet, gelangt von dort wieder zurück ans Audiointerface und wird mittels digital-analog-Wandlung auf den Kopfhörer des Interpreten und/oder des Technikers übertragen. Die Mikrofone können an dem mit dem Audiointerface verbundenen Vorverstärker angeschlossen sein. Erst mit einer geringen Latenz des Audiointerface aufgrund der darin verbauten Hochleistungsprozessoren gelingt eine qualitativ hochwertige, mithin professionelle, Audioaufzeichnung, insbesondere mit Effekt-Software-Plugins respektive Effekt-Prozessoren (Hall-Pluglns, Pitch Correction-PlugIns etc.).

Zur Erweiterung der (Mikrofon-)Kanäle kann es zweckmäßig sein, wenn Mikrofoneingänge apparativ hinzufügbar sind. Bevorzugt werden diese Kanalerweiterungen automatisch in der Audiointerface-Software angezeigt und können entsprechend angesteuert werden. An der ADAT-Schnittstelle kann mittels ADAT-Kabel beispielsweise ein (12-Kanal-)Mikrofonvorverstärker anschließbar sein. Mit zwei Vorverstärkern gelänge es beispielsweise, zusätzlich 24 Mikrofoneingänge bereitzustellen, womit sich beispielsweise die Musik eines Orchesters oder einer (Big) Band mit dem Schallereignis-Erfassungssystem dort aufzeichnen ließe, wo das Orchester respektive die Band ansässig ist, d. h. in dem Konzertsaal, in dem das Orchester regelmäßig probt. Die Orchester-Musiker müssen demnach nicht zu einem Tonstudio anreisen und sie müssen auch nicht für den Transport ihrer Instrumente sorgen. Das wirkt sich auch auf die Aufnahme-Qualität positiv aus, da die Aufnahme in gewohnter und bekannter Umgebung entsteht und nicht an einem fremden, für die Musizierenden (im Folgenden: Musiker) ungewohnten Ort. Außerdem entsteht eine hohe Kosteneinsparung der Transport-/Reisekosten. Ein potenziell besseres Ergebnis ist aufgrund des geringeren Stresslevels der Künstler aufgrund des Wegfalls der Organisation der Reise und des sicheren Transports der Instrumente sowie des erhöhten Zeitfaktors aufgrund der Organisation und Reise gegeben.

Eine Thunderbolt-Schnittstelle (Standard 3 oder 4 oder höher) ermöglicht es, dass essentielle Erweiterungen des Recording-Equipments mit PC-Betriebssystemen, insbesondere mit macOS- und/oder iOS-Betriebssystemen, kompatibel sind. Gemäß einer bevorzugten Variante des Schallereignis-Erfassungssystems umfassen die Benutzerdaten den Namen des Benutzers, die Adresse des Benutzers, die Rechnungsanschrift des Benutzers, die Adresse für die Schallereignis-Erfassung, die Anzahl der an der Schallereignis-Erfassung beteiligten Personen, die Art des Schallereignisses, die voraussichtliche Dauer des Schallereignisses, das Vorhandensein eines Bedarfs an einer akustischen Aufbereitung des erfassten Schallereignisses, das Vorhandensein eines Bedarfs an Assistenz während der Schallereignis-Erfassung, das Vorhandensein eines Beratungsbedarfs, und/oder das Vorhandensein eines Bedarfs an spezieller Ausrüstung des Transport-Kraftfahrzeugs. Die Benutzeroberfläche kann so konfiguriert sein, dass beispielsweise ausgewählt werden kann, ob das Schallereignis einem Solo-Künstler entstammt oder einer (Big) Band oder einem Chor oder einem Orchester, es kann ausgewählt oder angegeben werden, welches Schallereignis- respektive Musik-Genre bei der Erfassung relevant wäre (Ballade, Rock, Gospel, Klassik, alte Musik, Filmmusik, Sprache, Hörbuch, Gespräch, Geräusch, etc.), sowie die Dauer des Schallereignisses oder eine Anzahl von Schall-Teilereignissen (Anzahl der Musikstücke). Passend dazu erfolgt ein Abgleich mit den in der Datenverarbeitungseinrichtung hinterlegten Systemdaten, sodass, passend zu den Benutzerangaben, ein oder mehrere Techniker adressiert und beauftragt werden, die Erfahrungen mit der Komplexität und/oder dem Genre des Schallereignisses haben. Die Beauftragung respektive Anweisung der Techniker kann auch Informationen betreffend die (Tontechnik-)Ausstattung respektive den Umfang der (Tontechnik-)Ausstattung des Transport-Kraftfahrzeugs betreffen, auch das erfolgt auf Basis eines Abgleichs der Benutzerdaten mit den hinterlegten Systemdaten. Die Systemdaten umfassen auch Kosten- und Preis-Informationen, etwa für Fahrt-Kosten, Techniker-Honorare, Kosten für Assistenz, Miet-Gebühren für das Equipment, sowie Planungs- und Buchungs-Aufschläge. Ergebnis dieses Abgleichs sind vom System generierte Funktionsdaten respektive ein Funktionsdaten-Paket, das zumindest teilweise, an das Transport-Kraftfahrzeug gesendet wird, und/oder, zumindest teilweise, an den oder die Techniker, und/oder, zumindest teilweise, an die Recheneinrichtung, beispielsweise an einen mit dem Audiointerface verbundenen PC, und/oder, zumindest teilweise, an den Betreiber respektive an das Management des Schallereignis-Erfassungssystems, und/oder an den Benutzer. Indem die Benutzerdaten auf intelligente Weise mit den Systemdaten abgeglichen respektive zugeordnet werden, wird ein hinsichtlich Effizienz, Kosten, Zeitaufwand und Energiebedarf optimiertes Funktionsdaten-Paket generiert. Hierbei kann ein Datenverarbeitungs-Modul vorgesehen sein, das eine KI-basierte Software umfasst oder daraus gebildet ist (KI: Künstliche Intelligenz, d. h. Maßnahmen umfassend, wobei intelligent automatisiert und maschinell gelernt wird).

Gemäß einer bevorzugten Ausgestaltung umfassen die Systemdaten auch Crew-Daten, Partner-Daten, eine Location-Liste, eine Equipment-Liste, Vertragsdaten, und Benutzerdaten von bereits registrierten Benutzern eines Kunden- oder Benutzer-Stamms. Die Datenverarbeitungseinrichtung kann ferner so beschaffen sein, dass sie basierend auf den Systemdaten und den Funktions- und/oder Benutzerdaten Analyse-Daten generiert, mit denen Statistiken erstellt werden können beispielsweise betreffend Alter, Geschlecht und (geografische) Herkunft der Kunden, Art der verwendeten/angefragten Instrumente, Spiel-Level, Motivation der Kundschaft und Spielpraxis der Mitwirkenden sowie etwaige Auswirkungen auf die persönliche Entwicklung oder andere Merkmale. Die Analysedaten können verwendet oder bereitgestellt werden für Studien oder forschungsbezogene Auswertungs- respektive Erhebungsdaten, für Werbepartnerschaften, für einen angekoppelten (E-)Shop, zu Bildungszwecken und/oder zur Förderung der Künstler-/Musik-Landschaft. Mit Hilfe der Analyse-Daten können über die Datenverarbeitungseirichtung beispielsweise Fragebögen zirkuliert und Umfrage-Maßnahmen generiert werden, was beispielsweise in Kooperation mit (staatlichen oder privaten) Musik- und/oder Bildungseinrichtungen zweckmäßig sein kann.

Sobald der Benutzer die für das Aufzeichnen des oder der Schallereignisse relevanten Daten mittels Benutzeroberfläche erzeugt und in die Datenverarbeitungseinrichtung übermittelt hat, wird die tontechnische Ausrüstung des Transport-Kraftfahrzeugs konfektioniert und das Fahrzeug setzt sich zum Ort der Aufzeichnung in Bewegung. Am Ort der Aufzeichnung kann es zweckmäßig sein, wenn die Umgebung des Aufzeichnungsortes, beispielsweise der (Probe-)Raum, die Wohnung, die Halle, etc., vom Techniker(-Team) akustisch präpariert wird, beispielsweise durch akustische Abschirmung diverser Schallquellen. Insofern kann es zweckmäßig sein, wenn zur Standard-Ausrüstung des Transport-Kraftfahrzeugs portable Schalldämm-Mittel gehören.

Bei der Eingabe und Übermittlung der Benutzerdaten kann auswählbar sein, ob nur eine Aufzeichnung (Recording) gewünscht ist, oder ob zusätzlich (optional) eine nachgliederte tontechnische Dienstleistung, beispielsweise eine Überarbeitung (Editing/Mixing/Mastering) gewünscht ist. Optional kann auch eine systemassistierte Vermittlung respektive Beauftragung eines für das Schallereignis kompetenten Audiorespektive Mixing/Mastering-Engineers vorgesehen sein. Basierend auf den Angaben des Benutzers bei der Eingabe der Benutzerdaten kalkuliert das Schallereignis-Erfassungssystem den Endpreis, den der Benutzer für das Aufzeichnen des Schallereignisses und das Handling der Audiospur(en) an den Bertreiber des Schallereignis-Erfassungssystems zu entrichten hat. Ist eine Nachbearbeitung der Audiospur(en) benutzerseitig nicht gewünscht, kann sich der Benutzer die vom Erfassungssystem generierte(n) Audiospur(en) von der Datenbank oder aus einer Daten-Cloud herunterladen.

Gemäß einer bevorzugten Variante des Schallereignis-Erfassungssystems kann vorgesehen sein, dass die Funktionsdaten umfassen die Anzahl an Tontechnikern für das Vorbereiten und Durchführen der Schallereignis-Erfassung, die Anzahl von Assistenten und/oder Musikern für das Durchführen der Schallereignis-Erfassung, Reiseinformationen betreffend den oder die Techniker, Fahrzeug-Ausrüstungs-Informationen, Planungsinformationen betreffend die voraussichtliche Dauer der Schallereignis-Erfassung, Planungsinformationen für den voraussichtlichen Zeitrahmen für die Schallereignis-Erfassung, Planungsinformationen für die voraussichtlichen Kosten für die Schallereignis-Erfassung, Planungsinformationen für die voraussichtlichen Kosten für eine akustische Aufbereitung respektive tontechnische Nachbereitung des erfassten Schallereignisses, und/oder Audiodaten oder Audiospuren. Die Funktionsdaten können auch Übernachtungsinformationen, (Reise-)Kosteninformationen für den/die Techniker umfassen, oder Daten, die die Ausrüstung des Transport-Kraftfahrzeugs betreffen, beispielsweise die Anzahl der Mikrofone, die Anzahl von benötigten Kabeln, etwaige Schalldämm-Mittel, etc..

Eine effiziente Schallereignis-Aufzeichnung gelingt gemäß einer weiteren Systemvariante dann, wenn das Gestell für das Audiointerface als 19-Zoll-Trolli-Rack gebildet ist. Das Rack kann vom Techniker aus dem Transport-Kraftfahrzeug entnommen werden und am Ort der Aufnahme an eine für die Durchführung der Aufzeichnung geeignete Position gerollt werden. Das Rack kann beispielweise folgende Ausstattungskomponenten umfassen: zumindest einen Stromaufbereiter, zumindest eine Rack-Stromleiste, zumindest einen, insbesondere mehrkanaligen, Kopfhörer-Verstärker, zumindest ein Audiointerface und/oder zumindest einen, insbesondere mehrkanaligen, Mikrofonvorverstärker.

Gemäß einer bevorzugten Variante des Schallereignis-Erfassungssystems kann vorgesehen sein, dass die Datenverarbeitungseinrichtung solche Navigationsdaten an die Navigations- und Kommunikations-Einrichtung des Transport-Kraftfahrzeugs überträgt, die die anstehende Schallereignis-Erfassung betreffen. Indem von mehreren Benutzern das Aufzeichnen von mehreren Schallereignissen an unterschiedlichen Orten beauftragt wird, errechnet die Datenverarbeitungseinrichtung des Erfassungssystems eine in energetischer und ökologischer Hinsicht optimierte Aufzeichnungs-Auftragsabfolge unter Berücksichtigung möglichst kurzer und/oder schneller respektive effizienter Fahrstrecken des Transport-Kraftfahrzeugs. Zur Verbesserung der Ökobilanz des gesamten Schallereignis-Erfassungssystems kann es vorteilhaft sein, wenn bei mehreren anstehenden Schallereignis-Erfassungen die günstigste und ökologisch zweckmäßigste Navigations-Route an die Navigations- und Kommunikations-Einrichtung oder an den Fahrer/Techniker des Transport-Kraftfahrzeugs übertragen wird. Eine weitere Verbesserung der Ökobilanz des Erfassungssystems gelingt dann, wenn das Transport-Kraftfahrzeug verbrennungsmotorfrei, insbesondere elektrisch oder hybrid, angetrieben wird. Es kann beispielsweise ein Hybridfahrzeug vorgesehen sein, welches einen Verbrennungsmotor und einen Elektromotor umfasst. Zusätzlich können, beispielsweise auf dem Dach des Transport-Kraftfahrzeugs, Solar-Module zum unabhängigen Erzeugen von Strom zum Betreiben des Fahrzeugs und/oder der Fahrzeugausstattung vorgesehen sein. Ein überregionales respektive dezentrales Transport-Kraftfahrzeug-Flotten-System bietet beispielsweise für die Transport-Kraftfahrzeuge (Kleinbusse) vergleichsweise kurze Fahrtstrecken, da die jeweiligen Transport-Kraftfahrzeuge an unterschiedlichen Orten, etwa in Parkgaragen mit Lagerungsoption für die technische Ausstattung, sowohl in Ballungsgebieten als auch in ehr ländlichen Regionen zur Verfügung stehen. Eine lokale Sammelstelle für die gesamte Flotte ist nicht vorgesehen.

Bevorzugt ist die Datenverarbeitungseinrichtung dazu geeignet, Nachrichten und/ oder Daten, insbesondere Audiodaten, zu versenden, nämlich an den Benutzer, an den Betreiber des Systems, an das Transport-Kraftfahrzeug, an den Fahrer des Transport-Kraftfahrzeugs, an den im Transport-Kraftfahrzeug anwesenden Tontechniker, an einen Assistenten, an einen Audio-Engineer, und/oder an einen Musiker. Es kann auch eine Chat-Funktion vorgesehen sein zum Informationsaustausch zwischen mehreren oder sämtlichen Beteiligten bei einer Auftrags-Generierung und -Abwicklung.

Unter anderem zur Vereinfachung der Kommunikation zwischen Benutzer, Techniker und/oder Musiker kann vorgesehen sein, dass, insbesondere auf der Datenbank, eine Anwendersoftware (APP) hinterlegt und, insbesondere mittels Internetverbindung, abrufbar ist, womit der Benutzer des Systems, der Betreiber des Systems, ein Techniker, und/oder ein Musiker datentechnischen Zugriff auf System-Informationen, Benutzerdaten, Audio-Dateien, Kommunikations-Daten und/oder Funktionsdaten hat. Die APP kann den Benutzer informieren, wenn der Techniker unterwegs ist, sie kann dem Benutzer das Herunterladen einer Aufzeichnung (Tonspur(en)) ermöglichen, sie kann Informationen (Nachrichten) versenden an einen Techniker oder Engineer oder Musiker, sie kann Informationen bereitstellen die die Organisation und Planung der Schallereignis-Aufzeichnung betreffen und darüber hinaus zur Kommunikation zwischen beteiligten Personen untereinander und zwischen beteiligten Personen und des Datenverarbeitungssystem geeignet sein.

Ein Vereinfachen des Erfassens von Schallereignissen, um das Schallereignis-Erfassen für Künstler/Interpreten oder andere beteiligte Personen attraktiver zu gestalten, gelingt ferner mit einem Verfahren zum Erfassen eines Schallereignisses gemäß Anspruch 11. Bei dem Verfahren werden an eine in einem mit der Datenbank datentechnisch verbundenem Transport-Kraftfahrzeug (Kleintransporter) zu Transportzwecken angeordnete Schallereignis-Aufnahmeeinrichtung und/oder an eine (Fahrzeug-)Kommunikationseinrichtung und/oder an eine Recheneinrichtung (des Technikers) zumindest einige der wie eingangs beschrieben generierten Funktionsdaten übertragen, sodass das Transport-Kraftfahrzeug, zum Ort des Schallereignisses navigierbar ist, und sodass die Ausrüstung und/oder personelle Besetzung des Transport-Kraftfahrzeugs für die Aufnahme des Schallereignisses konfigurierbar ist.

Die Benutzerdaten können umfassen den Namen des Benutzers, die Adresse des Benutzers, die Rechnungsanschrift des Benutzers, die Adresse für die Schallereignis-Erfassung, die Anzahl der an der Schallereignis-Erfassung beteiligten Personen, die Art des Schallereignisses, die voraussichtliche Dauer des Schallereignisses, das Vorhandensein eines Bedarfs an einer akustischen Aufbereitung oder tontechnischen Nachbearbeitung des erfassten Schallereignisses, das Vorhandensein eines Bedarfs an Assistenz während der Schallereignis-Erfassung, das Vorhandensein eines Beratungsbedarfs, und/oder das Vorhandensein eines Bedarfs an spezieller Ausrüstung des Transport-Kraftfahrzeugs.

Die Funktionsdaten können umfassen die Anzahl an Tontechnikern für das Vorbereiten und Durchführen der Schallereignis-Erfassung, die Anzahl von Assistenten und/oder Musikern für das Durchführen der Schallereigniserfassung, Fahrzeug-Ausrüstungs-Informationen, Planungsinformationen betreffend die voraussichtliche Dauer der Schallereignis-Erfassung, Planungsinformationen für den voraussichtlichen Zeitrahmen für die Schallereignis-Erfassung, Planungsinformationen für die voraussichtlichen Kosten für die Schallereignis-Erfassung, und/oder Planungsinformationen für die voraussichtlichen kosten für eine akustische Aufbereitung oder tontechnische Nachbearbeitung des erfassten Schallereignisses.

Die Datenverarbeitungseinrichtung kann bevorzugt solche Navigationsdaten an die Navigations- und Kommunikations-Einrichtung des Transport-Kraftfahrzeug übertragen, die die anstehende Schallereignis-Erfassung betreffen, wobei bei mehreren anstehenden Schallereignis-Erfassungen die günstigste und ökologisch zweckmäßigste Navigations-Route an die Navigations- und Kommunikations-Einrichtung des Transport-Kraftfahrzeugs übertragen wird.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Schallereignis-Erfassungssystems schematisch dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigt
- Fig. 1: ein Schema eines Schallereignis-Erfassungssystems,
- Fig. 2: eine schematische Darstellung einer Variante eines Schallereignis-Erfassungssystems.

### DETAILLIERTE BESCHREIBUNG VON AUSFÜHRUNGSBEISPIELEN

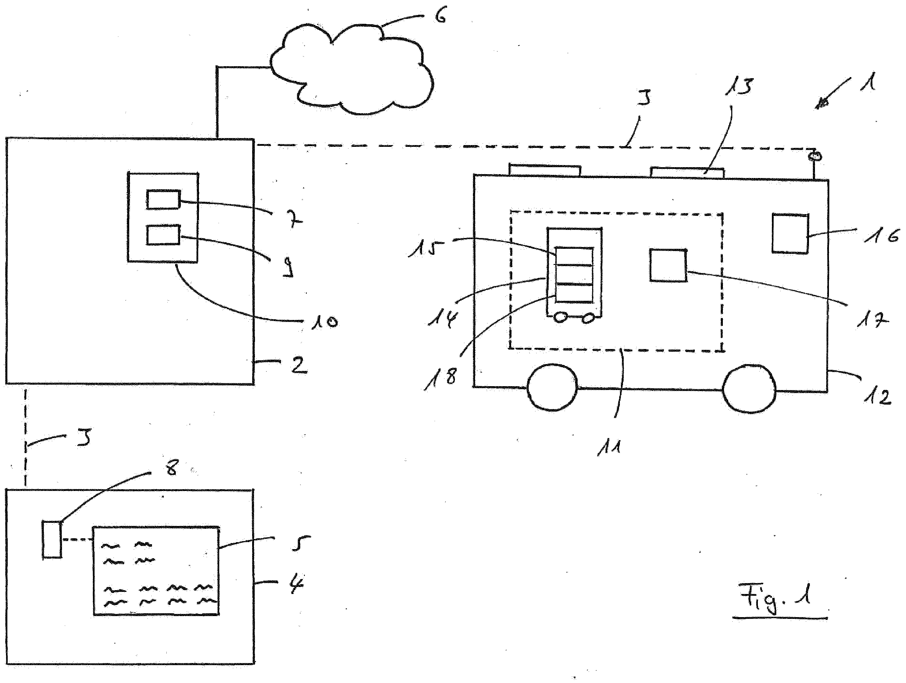

Die Fig. 1 zeigt ein Schema eines Schallereignis-Erfassungssystems 1. Das System 1 umfasst eine Datenverarbeitungseinrichtung 2 sowie eine Schallereignis-Aufzeichnungs-Einrichtung 11. Die Datenverarbeitungseinrichtung 2 ist mittels Funk- oder Internetverbindung 3 mit einen Datenanzeigegerät 4, beispielsweise einem (PC-)Monitor, datentechnisch verbunden. Auf dem Datenanzeigegerät 4 generiert die Datenverarbeitungseinrichtung 2 eine Benutzeroberfläche 5, womit ein Benutzer durch Betätigen einer Eingabeeinrichtung (Tastatur, Maus, Touchscreen) mehrere Benutzerdaten 8 generieren kann, die auf einer Datenbank 10 hinterlegbar sind, welche über eine Datenbank-Schnittstelle mit der Datenverarbeitungseinrichtung 2 verbunden ist. Die Datenbank 10 kann in einer Cloud-Umgebung 6 installiert sein.

Die Benutzerdaten 8 werden mit in der Datenverarbeitungseinrichtung 2 hinterlegten Systemdaten 7 verglichen, und durch den Abgleich werden Funktionsdaten 9 generiert, die, zumindest teilweise, an die Schallereignis-Aufzeichnungseinrichtung 11 übertragen werden.

Die Schallereignis-Aufzeichnungs-Einrichtung 11 ist in einem Kleintransporter 12 angeordnet. Der Kleintransporter 12 hat einen elektrischen Antrieb und zur Stromerzeugung können auf dem Dach des Kleintransporters 12 Solarmodule 13 vorgesehen sein. In einem in dem Kleintransporter 12 zu Transportzwecken befestigbaren und ansonsten portablen respektive rollbaren 19-Zoll-Rack 14 ist zumindest ein Audiointerface 15 und zumindest ein Mikrofonvorverstärker 18 angeordnet, beide für 19-Zoll-Einschübe konfiguriert. Außerdem ist in dem Kleintransporter 12 Platz und Stauraum vorgesehen für tontechnisches Equipment, beispielsweise für Mikrofone, Kabel, Schalldämm-Mittel, etc.. Der Kleintransporter 12 wird von einem Tontechniker gesteuert, der am Ort des Schallereignisses die Schallereignis-Erfassung tontechnisch umsetzt.

Der Kleintransporter 12 umfasst eine Navigations- und Kommunikations-Einrichtung 16, die mit der Datenverarbeitungseinrichtung 2 datentechnisch verbunden ist. So können Adress- und/oder Navigationsdaten direkt von der Datenverarbeitungseinrichtung 2 an den Kleintransporter 12 respektive an den Fahrer (Techniker) übertragen werden. Der Kleintransporter 12 umfasst außerdem eine portable Recheneinrichtung 17 (Laptop, Tablett, Notebook, o. Ä.), mit der eine Datenverbindung zum Audiointerface 15 und/oder zur Datenverarbeitungseinrichtung 2 herstellbar ist. Mit der Recheneinrichtung 17 kann das Audiointerface 15 vom (Ton-)Techniker bedient respektive gesteuert werden, und es ist, insbesondere nach Abschluss der Aufzeichnung(en), möglich, damit eine akustische Überarbeitung (z. B. Mixing, d. h. das Zusammenfügen der Tonspuren zu einer akustisch hochwertigen Einheit) der Audiodaten durchzuführen, beispielsweise von einem (qualifizierten) Toningenieur, Sound oder Audio Engineer. Beim Navigieren des Kleintransporters 12 und/oder beim Kommunizieren mit der Kommunikations-Einrichtung (16) und/oder bei einem Datenaustausch mit der Recheneinrichtung 17 sind zumindest einige der Funktionsdaten 9 datentechnisch abfragbar.

Die Benutzeroberfläche 5 (Buchungsplattform) ist so konfiguriert, dass mehrere Buchungsoptionen wählbar sind. Es können gebucht werden: ein Recording, d. h. ein Aufnahmeprozess mit zumindest einem Audio Engineer und dem Recording-Kleintransporter 12, ein Editing/Mixing/Mastering, d. h. ein Nachbearbeitungsprozess zur Nachbereitung der aufgenommenen Schallereignisse, eine Vermittlung eines Mixing/Mastering-Engineers in Verbindung mit einem Registrierungs- und Auswahlprozess (Aufnahme des Engineers in den Engineer Pool, eigenständige Registrierung, automatische Anfrage mit Zusage/Absage, beispielsweise innerhalb eines Zeitfensters, eine Eingabemaske eigener Fertigkeiten (Fachbereich, Genre, Referenzen etc.), eine Freischaltung der Bewerbung erfolgt nach eingereichtem Referenzmaterial).

Insbesondere die Buchungsplattform (5) kann umfassen oder gekoppelt sein an:
ein Intranet, wobei mit dem Intranet beispielsweise ein interner Login möglich ist, etwa für Kunden, Engineers, Musiker, (Geschäfts- oder Werbe-)Partner. Mit dem Login in das Intranet gelingt ein datentechnischer Zugang zu notwendigen System- und/oder Funktionsdaten (7, 9). Dazu können gehören Buchungsdaten des Kunden, Buchungsanfragen oder -daten für den Engineer, Buchungsanfragen oder -daten für den Musiker, etc.;
ein Registrierungs-Modul, wobei differenziert werden kann, ob sich ein Kunde registriert oder ein Engineer, ein Musiker oder ein (Geschäfts- oder Werbe-)Partner;
ein Kunden-Portal, wobei eine Buchungsmaske vorgesehen sein kann, ein Kunden-Account, eine Newsletter-Option, eine Mitglieds-Option, ein exklusiver Bereich mit Video-Streams, (Sonder-)Aktionen, (Sonder-)Angeboten, etc.;
ein Crew-Portal, wobei differenziert werden kann zwischen Crewmitgliedern gebildet aus Mixing/Mastering-Engineers, Recording-Engineers, Musiker, Partner. Beispielsweise kann vorgehen sein, dass über das Crew-Portal ein (Online-)Casting respektive eine (Online-)Bewerbung durchführbar ist, wobei über das Portal kommuniziert werden kann und/oder Einsendematerial hinterlegbar ist;
einen Kunden-Login-Bereich, umfassend eine Ankopplung an die Cloud 6 zwecks Anzeige des Auftrags-Status, der Rechnung(en), des Bezahlstatus und/oder des Kalenders - der Kunden-Login-Bereich kann umfassen oder gekoppelt sein an einen Community-Bereich (Veranstaltungs-Kalender, Netzwerk, News, Börse, etc.), einen File-Manager (Audio-Files, Fotos, Film-Files, etc.) und/oder einen Mail-Client (Kommunikation mit Engineers, (Studio-)Musikern, Equipment-Verleih, Helpdesk, etc.);
einen Equipment-Verleih-Login-Bereich umfassend beispielsweise Equipment-Listen, Auftragslisten, Umsatz-Daten und/oder Abrechnungsdaten, etc.;
einen Engineer-Login-Bereich umfassend eine Schnittstelle zu dem (Cloud-)Kalender, zu den Cloud-Files und/oder zumindest einem Mail-Client, wobei vorgesehen sein kann, dass über den Engineer-Login-Bereich abrufbar sind Umsatz- und/oder Abrechnungs-Daten, Hörproben, Auftragslisten, Community, Informationen/-daten, technische oder Equipment-Updates, (Online-)Kurse und/oder (Oniline-)Seminare (Refresher), etc.;
einen (Studio-)Musiker-Login-Bereich, wobei vorgesehen sein kann ein Hörproben-Manager, ein Vorstellungs- und/oder Bewerbungsportal, eine Schnittstelle zu zumindest einem Mail-Client und/oder eine Schnittstelle zu einer Community, etc.;
ein Foto/Film-Login-Bereich;
eine Schnittstelle zu einem Community-Bereich, insbesondere mit der Option der Erstellung eines öffentlichen Profils von Musizierenden/Sprechern/Tonkünstlern zwecks Präsentation eigener künstlerischer (musikalischer) Werke und/oder einem Übereinstimmungs- respektive Matching-Tool zwecks Suche nach Künstlern/Interpreten/Musikern, beispielsweise wenn eine Band einen Drummer sucht, wobei das, insbesondere künstliche Intelligenz (AI) nutzende, Matching-Tool nach Genre und/oder Drummer filtert und diesbezügliche Vorschläge generiert;
eine Online-Community Plattform mit einem, insbesondere diskriminierungsfreien, Algorithmus, vorzugsweise zur Förderung der Teilhabe von Semi-professionellen und Amateur-Musizierenden am Musikmarkt (gem. EU-Wertekodex),
eine Schnittstelle zu Bildungs- respektive Education-Tools für Musizierende, beispielsweise zum Lernen/Üben (Learn & Prepare), vorzugsweise als kostenloses (Freemium-)Abo-Modell mit kostenlosen Basis-Informationen für Musizierende zur optimalen Vorbereitung auf die Schallereignis-Aufzeichnung(en), wobei (Online-)Tutorials vorgesehen sind, regelmäßig stattfindende Online Learning Events (Streaming/Live) und/oder Rabatte/Partnerschaften für bspw. Technisches Equipment, und/oder
einen Administrator-Bereich, wobei vorgesehen sein kann eine Schnittstelle zu einem Bewerbungsportal, zu einer Community, zu einem News-Bereich, zu zumindest einem Mail-Client, zur Auftrags-Vermittlung und -Bearbeitung, zur Cloud 6, zu betriebswirtschaftlichen und/oder kaufmännischen Daten und Informationen und Auswertungen.

Über die Benutzeroberfläche 5 oder über eine System-APP können (monatliche) Einführungsseminare sowie Vertragsgespräche terminiert und koordiniert werden. Das System 1 kann so programmiert sein, dass eine Vermittlung von Musikern optional hinzufügbar ist. Es kann eine Funktion implementiert sein, die das Ausleihen eines (Musik-)Instruments und/oder bestimmter Tontechnik vorsieht. Das System 1 kann vernetzt werden beispielsweise mit Musik-Einzel- und Großhandels-Einrichtungen.

Innerhalb des Systems 1 soll die Terminfindung automatisiert ablaufen, d. h. der Betreiber des Systems 1 muss die Terminfindung nicht selbst vornehmen, er kann sie lediglich überwachen. Dies betrifft die Termine für das Aufzeichnung, d. h. für den Benutzer und/oder für den Techniker, Musiker, Assistenten, Engineer, usw.. Darin eingeschlossen ist auch eine Anschlussterminüberwachung und -findung. Das System 1 kann ein Erinnerungs- und/oder Alert-Modul umfassen, damit die Wahrscheinlichkeit, dass Termine "platzen" oder verlegt werden müssen, sinkt. Es kann auch vorgesehen sein, dass Termine hilfsweise doppelt belegt werden, wobei das System dann eine entsprechende Ersatz-Person berücksichtigt. Dies reduziert für den Betreiber ein Ausfall-Risiko bei Termin-Absagen oder anderweitigen Terminproblemen.

Das System 1 kalkuliert die Kosten für den Benutzer transparent und selbsttätig, je nach Buchungsoptionen und -umfang. Eine Anbindung an ein Bezahlsystem (z. B. PayPal, Klarna) kann zweckmäßig sein.

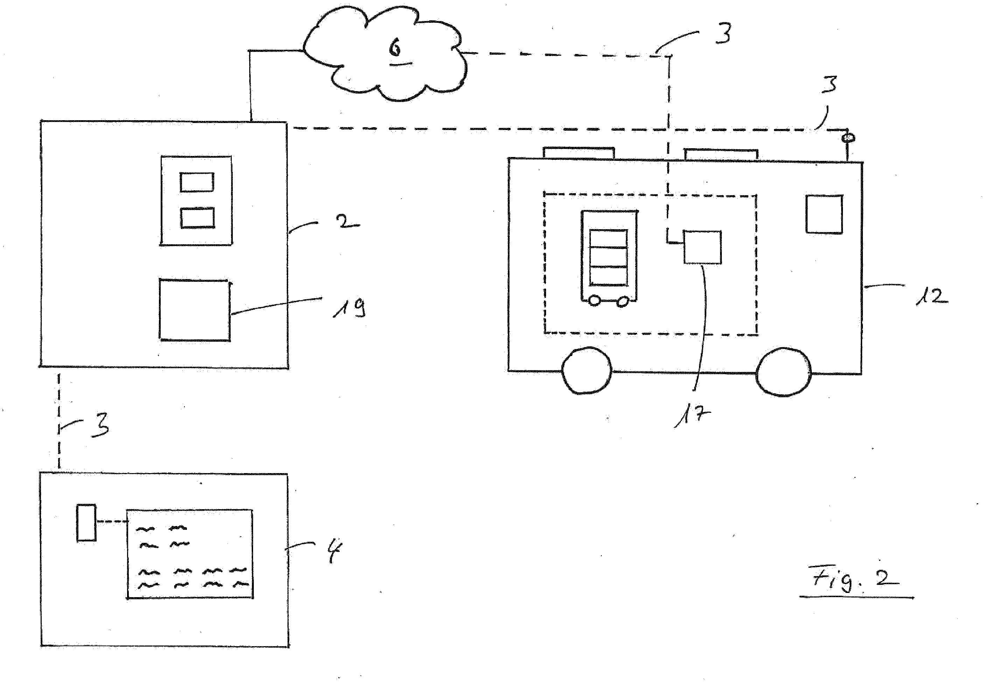

Eine Variante des Schallereignis-Erfassungssystems 1 ist in Fig. 2 dargestellt. Demnach umfasst das System 1 zusätzlich ein Terminüberwachungssystem 19. Das Terminüberwachungssystem 19 kann Bestandteil der Datenverarbeitungseinrichtung 2 oder der Cloud 6 sein. Es kann beispielsweise mittels Internetverbindung (3) mit der Datenverarbeitungseinrichtung 2 datentechnisch verbunden sein. Das Terminüberwachungssystem umfasst einen Online-Kalender, eine Terminanfrage-Einrichtung und/oder eine Kunden-Informations-Einrichtung. Mit dem Terminüberwachungssystem 19 kann der Kunde beispielsweise einen freien Termin oder Zeitraum auswählen, wodurch von der Termin-Anfrage-Einrichtung eine Terminanfrage an (einen oder mehrere) (Ton-)Techniker und/oder Engineer(s) ausgelöst wird. In einem Antwortzeitraum von beispielsweise 48 Stunden erhält der Kunde über die Kunden-Informations-Einrichtung eine verbindliche Termin-Zusage, ggf. mit Preisangaben. Ein optionales-Zahlungs-Modul des Terminüberwachungssystems 19 oder der Datenverarbeitungseinrichtung 2 leitet eine Zahlungsvorgang beispielsweise mittels Kreditkarte, PayPal, Klarna und/oder mittels Ratenzahlungs-Maßnahmen ein.

Bei der System-Variante gemäß Fig. 2 ist zusätzlich eine Audio-Daten-Upload-Funktion implementiert. Von der Recheneinrichtung 17 können die Audio-Daten direkt in die Cloud 6 hochgeladen werden.

### BEZUGSZEICHENLISTE

- 1: Schallereignis-Erfassungssystem
- 2: Datenverarbeitungseinrichtung
- 3: Internetverbindung
- 4: Datenanzeigegerät
- 5: Benutzeroberfläche
- 6: Cloud-Umgebung
- 7: Systemdaten
- 8: Benutzerdaten
- 9: Funktionsdaten
- 10: Datenbank
- 11: Schallereignis-Aufzeichnungs-Einrichtung
- 12: Kleintransporter
- 13: Solarmodul
- 14: Gestell, Rack
- 15: Audiointerface
- 16: Navigations-/Kommunikationseinrichtung
- 17: Recheneinrichtung
- 18: Mikrofonvorverstärker
- 19: Terminüberwachungssystem

## Patentansprüche

1. Schallereignis-Erfassungssystem (1) umfassend eine Datenverarbeitungseinrichtung (2) sowie eine Schallereignis-Aufzeichnungs-Einrichtung (11),
wobei die Datenverarbeitungseinrichtung (2) dazu geeignet ist, eine auf einem mit der Datenverarbeitungseinrichtung (2) datentechnisch verbindbaren Datenanzeigegerät (4) anzeigbare Benutzeroberfläche (5) zu generieren,
wobei über die Benutzeroberfläche (5) mittels einem mit der Datenverarbeitungseinrichtung (2) verbindbaren Dateneingabegerät mehrere Benutzerdaten (8) generierbar sind, welche in einer mit der Datenverarbeitungseinrichtung (2) über zumindest eine Datenbank-Schnittstelle verbundenen Datenbank (10) hinterlegbar sind,
wobei in der Datenverarbeitungseinrichtung (2) Funktionsdaten (9) dadurch generierbar sind, dass die Benutzerdaten (8) mit in der Datenverarbeitungseinrichtung (2) hinterlegten Systemdaten (7) verglichen und/oder datentechnisch zugeordnet werden,
wobei die Schallereignis-Aufzeichnungs-Einrichtung (11) zu Transportzwecken in einem mit der Datenbank (10) datentechnisch verbundenen Transport-Kraftfahrzeug (12) oder Kleintransporter angeordnet ist, und
wobei die Schallereignis-Aufzeichnungs-Einrichtung (11) zumindest ein in einem fahrbaren und/oder portablen sowie in dem Transport-Kraftfahrzeug (12) oder Kleintransporter befestigbaren Gestell (14) angeordnetes digitales Audiointerface (15) mit zumindest mehreren Mikrofoneingängen für mehrere im Transport-Kraftfahrzug (12) oder Kleintransporter verstaubare Mikrofone, umfasst
**dadurch gekennzeichnet,**
**dass** das Transport-Kraftfahrzeug (12) oder der Kleintransporter eine Navigations- und Kommunikations-Einrichtung (16) umfasst, welche mit der Datenverarbeitungseinrichtung (2) datentechnisch verbunden ist,
**dass** das Transport-Kraftfahrzeug (12) oder der Kleintransporter eine portable Recheneinrichtung (17) umfasst, welche datentechnisch mit dem Audiointerface (15) und mit der Datenverarbeitungseinrichtung (2) verbunden ist, und
**dass** beim Navigieren des Transportfahrzeugs (12) oder Kleintransporter und/oder beim Kommunizieren mit der Kommunikations-Einrichtung (16), und/oder bei einem Datenaustausch mit der Recheneinrichtung (17) zumindest einige der Funktionsdaten (9) datentechnisch abfragbar sind.

2. Schallereignis-Erfassungssystem (1) nach Anspruch 1, **dadurch gekennzeichnet, dass** das Audiointerface (15) zumindest umfasst zumindest einen Low-Latency-Treiber, zumindest ein Interface zu einer Tonstudio-Simulationssoftware, zumindest einen Thunderbolt-Anschluss mit einem Thunderbolt-2-Stanard oder einen Thunderbolt-3-Standard oder einen Thunderbolt-4-Standard oder einem höheren Thunderbolt-Standard, und/oder mindestens 8 Mikrofon-Eingänge, insbesondere erweiterbar auf mindestes 32 Mikrofon-Eingänge, und/oder zumindest eine ADAT-Schnittstelle.

3. Schallereignis-Erfassungssystem (1) nach Anspruch 1 oder 2, **dadurch gekennzeichnet, dass** die Benutzerdaten (8) umfassen den Namen des Benutzers, die Adresse des Benutzers, die Rechnungsanschrift des Benutzers, die Adresse für die Schallereignis-Erfassung, die Anzahl der an der Schallereignis-Erfassung beteiligten Personen, die Art des Schallereignisses, die voraussichtliche Dauer des Schallereignisses, das Vorhandensein eines Bedarfs an einer akustischen Aufbereitung des erfassten Schallereignisses, das Vorhandensein eines Bedarfs an Assistenz während der Schallereignis-Erfassung, das Vorhandensein eines Beratungsbedarfs, und/oder das Vorhandensein eines Bedarfs an spezieller Ausrüstung des Transport-Kraftfahrzeugs oder Kleintransporters.

4. Schallereignis-Erfassungssystem (1) nach einem der Ansprüche 1 bis 3, **dadurch gekennzeichnet, dass** die Funktionsdaten (9) umfassen die Anzahl an Tontechnikern für das Vorbereiten und Durchführen der Schallereignis-Erfassung, die Anzahl von Assistenten und/oder Musikern für das Durchführen der Schallereigniserfassung, Reiseinformationen betreffend den oder die Techniker, Fahrzeug-Ausrüstungs-Informationen, Planungsinformationen betreffend die voraussichtliche Dauer der Schallereignis-Erfassung, Planungsinformationen für den voraussichtlichen Zeitrahmen für die Schallereignis-Erfassung, Planungsinformationen für die voraussichtlichen Kosten für die Schallereignis-Erfassung, Planungsinformationen für die voraussichtlichen Kosten für eine akustische Aufbereitung des erfassten Schallereignisses, und/oder Audiodaten oder Audiospuren.

5. Schallereignis-Erfassungssystem (1) nach einem der Ansprüche 1 bis 4, **dadurch gekennzeichnet, dass** das Gestell (14) für das Audiointerface als 19-Zoll-Trolli-Rack gebildet ist.

6. Schallereignis-Erfassungssystem (1) nach einem der Ansprüche 1 bis 5, **dadurch gekennzeichnet, dass** die Datenverarbeitungseinrichtung (2) solche Navigationsdaten an die Navigations- und Kommunikations-Einrichtung (16) des Transport-Kraftfahrzeugs (12) oder Kleintransporters überträgt, die die anstehende Schallereignis-Erfassung betreffen.

7. Schallereignis-Erfassungssystem (1) nach Anspruch 6, **dadurch gekennzeichnet, dass** bei mehreren anstehenden Schallereignis-Erfassungen die günstigste und ökologisch zweckmäßigste Navigations-Route an die Navigations- und Kommunikations-Einrichtung (16) des Transport-Kraftfahrzeugs (12) oder Kleintransporters übertragen wird.

8. Schallereignis-Erfassungssystem (1) nach einem der Ansprüche 1 bis 7, **dadurch gekennzeichnet, dass** das Transport-Kraftfahrzeug (12) oder Kleintransporter verbrennungsmotorfrei, nämlich elektrisch oder hybrid, angetrieben wird.

9. Schallereignis-Erfassungssystem (1) nach einem der Ansprüche 1 bis 8, **dadurch gekennzeichnet, dass** die Datenverarbeitungseinrichtung (2) dazu geeignet ist, Nachrichten und/oder Daten, insbesondere Audiodaten, zu versenden an den Benutzer, an den Betreiber des Systems, an das Transport-Kraftfahrzeug (12) oder Kleintransporter den Fahrer des Transport-Kraftfahrzeugs (12) oder Kleintransporter den im Transport-Kraftfahrzeug (12) oder Kleintransporter anwesenden Tontechniker, an einen Assistenten, an einen Audio-Engineer, und/oder an einen Musiker.

10. Schallereignis-Erfassungssystem (1) nach einem der Ansprüche 1 bis 9, **dadurch gekennzeichnet, dass**, insbesondere auf der Datenbank (10), eine Anwendersoftware (APP) hinterlegt und, insbesondere mittels Internetverbindung (3), abrufbar ist, womit der Benutzer des Systems (1), der Betreiber des Systems (1), ein Techniker, und/oder ein Musiker datentechnischen Zugriff auf System-Informationen, Benutzerdaten (8), Audio-Dateien, Kommunikations-Daten und/oder Funktionsdaten (9) hat.

11. Verfahren zum Erfassen eines Schallereignisses, bei dem auf einem Datenanzeigegerät eines Benutzers eine von einer Datenverarbeitungseinrichtung generierte Benutzeroberfläche angezeigt wird,
wobei über die Benutzeroberfläche mittels einem mit der Datenverarbeitungseinrichtung verbindbaren Dateneingabegerät mehrere Benutzerdaten generiert werden, welche in einer mit der Datenverarbeitungseinrichtung über zumindest eine Datenbank-Schnittstelle verbundenen Datenbank hinterlegt werden,
wobei in der Datenverarbeitungseinrichtung Funktionsdaten dadurch generiert werden, dass die Benutzerdaten mit in der Datenverarbeitungseinrichtung hinterlegten Systemdaten verglichen und/oder datentechnisch zugeordnet werden,
**dadurch gekennzeichnet, dass**
an eine in einem mit der Datenbank datentechnisch verbundenem Transport-Kraftfahrzeug oder Kleintransporter zu Transportzwecken angeordnete Schallereignis-Aufnahmeeinrichtung und/oder an eine Kommunikationseinrichtung und/oder an eine Recheneinrichtung
zumindest einige der Funktionsdaten übertragen werden, sodass das Transport-Kraftfahrzeug oder der Kleintransporter zum Ort des Schallereignisses navigierbar ist, und sodass die Ausrüstung und/oder personelle Besetzung des Transport-Kraftfahrzeugs oder Kleintransporters für die Aufnahme des Schallereignisses konfigurierbar ist.

12. Verfahren nach Anspruch 11, **dadurch gekennzeichnet, dass** die Benutzerdaten umfassen den Namen des Benutzers, die Adresse des Benutzers, die Rechnungsanschrift des Benutzers, die Adresse für die Schallereignis-Erfassung, die Anzahl der an der Schallereignis-Erfassung beteiligten Personen, die Art des Schallereignisses, die voraussichtliche Dauer des Schallereignisses, das Vorhandensein eines Bedarfs an einer akustischen Aufbereitung des erfassten Schallereignisses, das Vorhandensein eines Bedarfs an Assistenz während der Schallereignis-Erfassung, das Vorhandensein eines Beratungsbedarfs, und/oder das Vorhandensein eines Bedarfs an spezieller Ausrüstung des Transport-Kraftfahrzeugs oder Kleintransporters.

13. Verfahren nach Anspruch 11 oder 12, **dadurch gekennzeichnet, dass** die Funktionsdaten umfassen die Anzahl an Tontechnikern für das Vorbereiten und Durchführen der Schallereignis-Erfassung, die Anzahl von Assistenten und/oder Musikern für das Durchführen der Schallereigniserfassung, Fahrzeug-Ausrüstungs-Informationen, Planungsinformationen betreffend die voraussichtliche Dauer der Schallereignis-Erfassung, Planungsinformationen für den voraussichtlichen Zeitrahmen für die Schallereignis-Erfassung, Planungsinformationen für die voraussichtlichen Kosten für die Schallereignis-Erfassung, und/oder Planungsinformationen für die voraussichtlichen kosten für eine akustische Aufbereitung des erfassten Schallereignisses.

14. Verfahren nach einem der Ansprüche 11 bis 13, **dadurch gekennzeichnet, dass** die Datenverarbeitungseinrichtung solche Navigationsdaten an die Navigations- und Kommunikations-Einrichtung des Transport-Kraftfahrzeug, insbesondere Kleintransporter, überträgt, die die anstehende Schallereignis-Erfassung betreffen, wobei bei mehreren anstehenden Schallereignis-Erfassungen die günstigste und ökologisch zweckmäßigste Navigations-Route an die Navigations- und Kommunikations-Einrichtung des Transport-Kraftfahrzeugs oder Kleintransporters übertragen wird.
